# EUROPÄISCHE PATENTSCHRIFT

(11) **EP 2 571 943 B1**
(45) Veröffentlichungstag und Bekanntmachung des Hinweises auf die Patenterteilung: **12.12.2018**
(21) Anmeldenummer: 11782026.6
(22) Anmeldetag: 19.05.2011
(51) Int. Cl.: C09C 1/02, C09C 1/06, C09C 1/36, C09C 3/12, C07F 7/18, C07F 7/28, C08K 9/06, C09D 5/03, C09D 7/62

(54) **FUNKTIONALISIERTE PARTIKEL UND DEREN VERWENDUNG**
FUNCTIONALIZED PARTICLES AND USE THEREOF
PARTICULES FONCTIONNALISÉES ET LEUR UTILISATION

(30) Priorität: 20.05.2010 DE 102010029190
(43) Veröffentlichungstag der Anmeldung: 27.03.2013
(73) Patentinhaber: Sachtleben Chemie GmbH, 47198 Duisburg (DE)
(72) Erfinder: FRITZEN, Petra, 47443 Moers (DE); ROHE, Bernd, 47445 Moers (DE)
(74) Vertreter: Nobbe, Matthias
(86) Internationale Anmeldenummer: PCT/DE2011/075116
(87) Internationale Veröffentlichungsnummer: WO 2012/025105

(56) Entgegenhaltungen:
- WO-A1-2005/003218
- WO-A1-2008/023073
- WO-A2-2007/084245
- BYRNE C M ET AL: "Epoxysilane Oligomer for Protective Coatings", INTERNET CITATION, March 2011 (2011-03), pages 1-12, XP002696044, Retrieved from the Internet: URL:http://www.google.de/url?sa=t&rct=j&q= coatosil%20mp%20200&source=web&cd=4&ved=0C DwQFjAD&url=http%3A%2F%2Fwww.momentive.com %2Fworkarea%2Fdownloadasset.aspx%3Fid%3D25 159&ei=l953Ud_dEs-KswaOq4HYCg&usg=AFQjCNFD YVMIgrS54poRNLXEutYGpzIT1g&bvm=bv.45580626 ,d.ZWU&cad=rja [retrieved on 2013-04-24]
- Momentive: , 15 April 2000 (2000-04-15), Retrieved from the Internet: URL:https://www.momentive.com/en-us/produc ts/literature/silquest-silanes-product-sel ection-guide/ [retrieved on 2018-01-04]

## Beschreibung

Die vorliegende Erfindung betrifft funktionalisierte Partikel, Verfahren zur Herstellung solcher funktionalisierten Partikel, sowie die Verwendung der funktionalisierten Partikel zur Herstellung von Beschichtungsmitteln und deren Verwendung zum Beschichten von Gegenständen, insbesondere in Kombination der funktionalisierten Partikeln mit reaktiven Gruppen enthaltenden Verbindungen einschließlich Monomeren, sowie die so beschichteten Gegenstände. Die Anwendung dieser Kombination der funktionalisierten Partikeln mit reaktiven Monomeren in dünnen Schichten auf Substraten wie Metall, Holz, Kunststoffen führt zu verbesserter Kratzfestigkeit, Abriebbeständigkeit, Steinschlagfestigkeit, Korrosionsschutz, Haftung, Chemikalienbeständigkeit, Farbstabilität, Thermostabilität der so beschichteten Substrate.

Beschichtungen erfüllen schon lange nicht mehr nur einen dekorativen Zweck, sondern dienen vielmehr zum Schutz der darunterliegenden Substrate und beinhalten vielfältige Zusatzfunktionen. Deshalb ist es erstrebenswert, so viele Eigenschaften wie möglich in einer Beschichtung zu vereinen sind.

Die Beschichtungsmittel umfassen grundsätzlich Leimfarben, Kalkfarben, Lacke, Lasuren. Dispersionsfarben, Polymerisatharzfarben, sowie Pulverlacke. Die zur Herstellung von Beschichtungen verwendeten Beschichtungsmittel sind im Stand der Technik bereits vielfach beschrieben. In den Beschichtungsmitteln kommen oftmals chemische Verbindungen mit reaktiven Gruppen und als auch Verbundteilchen zum Einsatz, die beim Aushärten vernetzen und auf dem Substrat anhaftende Beschichtungen ergeben

So beschreibt die EP 2050796 B1 eine Beschichtung mit verbesserter Deckkraft, daraus hergestellte Zusammensetzungen und Verfahren zu ihrer Herstellung, die unter Verwendung von Verbundteilchen hergestellt werden. Bei dem in der EP 2050796 B1 beschriebenen Verfahren werden Verbundteilchen erhalten, die ein Pigmentteilchen und eine Mehrzahl von Polymerteilchen, wobei jedes der Polymerteilchen mindestens eine umgesetzte komplementäre funktionelle Gruppe umfasst, die eine kovalente Bindung mit dem Pigmentteilchen bildet, umfassen. Dazu werden anorganische Pigmente in Alkoholen suspendiert, durch Zugabe von langkettigen monofunktionellen Alkoxysilanen funktionalisiert und anschließend Polymerteilchen der Suspension zugesetzt, die einen Spacer-Effekt bewirken und damit der Flockulation der Pigmentteilchen entgegen wirken sollen. Die funktionalisierten Partikel werden in Form einer Suspension als Dispersionsbeschichtung mit einem Gehalt an Lösungsmittel verwendet.

Neben lösungsmittelhaltigen Systemen gibt es auch solche Beschichtungsmittel, die als "trockene" Mischungen verwendet werden. Solche Pulverlacke sind im Stand der Technik ebenfalls hinlänglich bekannt. In der Regel enthalten diese Pulverlacke Bindemittel, Additive, Farbmittel und Füllstoffe, allerdings keine Lösemittel. Dabei sind die chemischen Unterschiede zwischen den in Pulverlacken und konventionellen Lacken eingesetzten Rohstoffen nicht groß, und die Vernetzungsmechanismen eines Pulverlackfilmes ähneln denen eines Einbrennlackes, bei dem unter Temperatureinfluss zwei Reaktionspartner durch Bildung eines organischen Netzwerkes eine chemische Verbindung eingehen. Fast alle Rohstoffe für Pulverlacke liegen in der Regel als Pulver vor.

In Pulverlacken werden vor allem auch aus wirtschaftlichen Gründen Füllstoffe eingesetzt. Zu den am häufigsten verwendeten Füllstoffen zählen Calciumcarbonat, Schwerspat sowie gefälltes Bariumsulfat. Füllstoff enthaltende Pulverlacksysteme weisen den Nachteil auf, dass sie eine schlechte Heißwasserbeständigkeit besitzen. Dies kann auf die schlechte Anbindung des Bindemittels an die Füllstoffoberfläche zurückgeführt werden. In die vorhandenen Mikrorisse kann Wasser eindringen, welches zu veränderten optischen Eigenschaften wie z. B. dem Bleaching bis hin zu schlechter Korrosionsbeständigkeit führen kann.

Die im Stand der Technik bekannten, in Pulverlacken eingesetzten Pigmente sind teilweise mit einer organischen Nachbehandlung z. B. auf Basis eines Polyalkohols ausgestattet, die nur physikalisch über Dipol-Dipol- oder Van-der-Waals-Bindungen an die Pigmentoberfläche gebunden sind. Diese Wechselwirkungen tragen vor allem zur besseren Benetzung bei der Einarbeitung der Pigmente bei, nicht aber zu einer sterischen Stabilisierung. Eine solche Stabilisierung kann jedoch über den Zusatz geeigneter Additive erreicht werden.

Die bisher eingesetzten Stabilisierungskomponenten weisen aber den Nachteil auf, dass sie zur Migration neigen. Dies führt zu einer Verschlechterung der optischen Eigenschaften (Glanz, Farbton) sowie der Gebrauchseigenschaften (z. B. Korrosionsbeständigkeit, Heißwasserbeständigkeit).

WO 2008/023073 A1 offenbart ein Verfahren zur Herstellung anorganisch oberflächenmodifizierter, ultrafeiner Partikel. Die Partikel werden ein einem ersten Schritt mit einer anorganischen Schicht belegt. Anschließend wird eine Oberflächenmodifizierung mit Organoalkoxysilanen vorgenommen.

WO 2005/003218 A1 betrifft eine Zusammensetzung die wenigstens eine Silan und/oder Siloxanverbindung und wenigstens ein anorganisches oxidisches Pulfer und ggf. eine organische oder anorganische Säure umfasst.

WO 2007/084245 A2 beschreibt die Synthese von trocken silanisiertem Silica. Gemäß WO 2007/084245 A2 werden Alkoxysilane als Monomere zur Verwendung in dem Trockenverfahren beschrieben. Die Nebenprodukte Alkohol und Lösungsmittel müssen gemäß diesem Prozess entfernt werden, und das erhältliche Produkt ist zur Verwendung im Chromatographie-System, insbesondere der HPLC vorgesehen.

Seitens der Erfinder wurde gefunden, dass funktionalisierte Partikel, insbesondere Titandioxidpartikel und Bariumsulfatpartikel, mit kovalent an die Partikel gebundenen, reaktiven funktionellen Resten neben einem verbesserten Deckvermögen insbesondere zu einer verbesserten Heißwasser-Beständigkeit insbesondere in Pulverlacksystemen führen. Damit können dünnere Schichten bei der Applikation unter Erhalt des Deckvermögens realisiert werden, die bei Heißwasser-Einfluss sich farblich deutlich weniger verändern. Damit ist sowohl ein technischer als auch wirtschaftlicher Vorteil für den Verarbeiter des Pulverlackes gegeben, der eine Beschichtung mit verbesserten Eigenschaften wie Kratzfestigkeit, Abriebbeständigkeit, Steinschlagfestigkeit, Korrosionsbeständigkeit, Haftung, Chemikalienbeständigkeit, Deckvermögen Farbstabilität sowie, Thermostabilität, insbesondere Heißwasserbeständigkeit erhält.

Die Erfindung ist daher gerichtet auf funktionalisierte Partikel, die nach dem im Folgenden beschriebenen erfindungsgemäßen Verfahren erhältlich sind, die anorganische Partikel mit daran über -O-Si-Einheiten chemisch gebundenen gradkettigen oder verzweigtkettigen Kohlenwasserstoff-Resten mit 1 bis 20, bevorzugt 1 bis 10 Kohlenstoffatomen mit mindestens einer reaktiven Gruppe am Kohlenwasserstoffrest, die eine weitere chemische Bindung mit einem Reaktionspartner ausbilden kann, umfassen. Erfindungsgemäß ist ein solcher gradkettiger oder verzweigtkettiger Kohlenwasserstoff-Rest über mindestens eine -O-Si- Einheit an die Partikeloberfläche gebunden. Von Vorteil ist die Ausbildung einer Si-O-Si- Rückgrat-Struktur, wobei mehrere solcher Si-O-Einheiten, die mindestens einen Kohlenwasserstoffrest tragen, an die Partikeloberfläche binden, um die Anhaftung der Kohlenwasserstoff-Reste mit 1 bis 20, bevorzugt 1 bis 10 Kohlenstoffatomen mit mindestens einer reaktiven Gruppe am Kohlenwasserstoffrest an der Partikeloberfläche zu verstärken.

Als chemisch-reaktive Verbindungen zur Herstellung der funktionalisierten Partikel, die in der Lage sind, mit der Partikeloberfläche als auch mit weiteren reaktiven Gruppen enthaltenden Materialien wie Epoxyharze durch Ausbildung von kovalenten Bindungen zu reagieren, werden erfindungsgemäß Silanoligomere mit der allgemeinen Strukturformel (II)

(R¹)(OR²)₂Si-O-[-Si(R¹)(OR²)-O-]ₘ₋-Si(R¹)(OR²)₂

oder Mischungen davon eingesetzt. Dabei stehen in den zuvor genannten Formeln:
R¹ für einen nicht-hydrolysierbaren, aliphatischen gradkettigen oder verzweigtkettigen Kohlenwasserstoffrest mit 1 bis 18, bevorzugt Gruppe mit 1 bis 10 Kohlenstoffatomen, auch mit -O- in der Kette, mit mindestens einer, bevorzugt endständigen chemisch-reaktiven Gruppe, die eine Additions- oder Kondensationsreaktion eingehen kann, bevorzugt ausgewählt aus Amino-, Epoxy-, Vinyl-, Methacrylat, ,
R² für H oder eine hydrolysierbare Gruppe, vorzugsweise mit R² = C₁-C₁₈-Alkyl, besonders C₁-C₁₀₋Alkyl, wobei
m = 0 - 10 ist,
wobei in den zuvor genannten Formeln die Gruppen R¹ und R² jeweils auch für unterschiedliche Reste stehen können. Obgleich die Reste R² innerhalb eines Moleküls der Strukturformel (II) sämtlichst als C₁-C₁₈-Alkyl wie oben definiert vorliegen können, können in der Regel auch teilhydrolysierte Verbindungen mit ein oder mehreren OH-Gruppen verwendet werden, die bei weiterer Hydrolyse eine geringere Menge an C₁-C₁₈-Alkohol abgeben.

Die erfindungsgemäß verwendbaren Silanoligomere haben eine -Si-O-Si-Rückgratstruktur, wobei an jedes Si-Atom der Kette ein nicht-hydrolysierbarer, aliphatischer gradkettiger oder verzweigtkettiger Kohlenwasserstoffrest mit 1 bis 18, bevorzugt mit 1 bis 10 Kohlenstoffatomen, der auch mindestens eine Ethereinheit -C-O-C- in der Kette aufweisen kann und der mindestens eine funktionelle (chemisch-reaktive) Gruppe, ausgewählt aus Amino-, Epoxy-, Vinyl-, Methacrylat, die mit funktionelle Gruppen andere Verbindungen wie Monomeren Additions- oder Kondensationsreaktionen eingehen kann, bevorzugt endständig, hat, sowie eine (endständig zwei) Gruppe -OR², wobei R² für Wasserstoff oder eine hydrolysierbare Gruppe, vorzugsweise wobei R² für C₁-C₁₈-Alkyl steht, gebunden sind. Somit hat jedes Si-Atom in der Kette ein oder zwei über -O-gebundene Si-Nachbaratome, und im Gegensatz zu den Silanen, die ausschließlich T0-Signale im 29Si-NMR zeigen, besitzen die in der Erfindung eingesetzten Silanoligomere somit ausschließlich Si-Atome, die mittels 29Si-NMR als T1 und T2 Atome charakterisiert werden. Auf Grund dieses Rückgrat-Molekülaufbaus bewirkt die Ankopplung bereits einer OH-Gruppe auf der Partikeloberfläche eine Fixierung, die so das Ankoppeln des gesamten Silanoligomers über die weiteren -OR²-Gruppen erzwingt. Beispielhaft für einsetzbare Silanoligomere sind erfindungsgemäß CoatOSil 142 Silane® (vorhydrolysiertes Aminosilan der Fa. Momentive) oder CoatOSil MP200 Silane® (vorhydrolysiertes Epoxysilan der Fa. Momentive) genannt, die zur Funktionalsierung der Partikel eingesetzt werden können.

Als Partikel für die funktionalisierten Partikel (funktionalisierte Pigmente und funktionalisierte Füllstoffe) im Sinne dieser Erfindung sind anorganische Partikel wie Bariumsulfat, anorganisch-nachbehandeltes Bariumsulfat, Zinksulfid, anorganisch-nachbehandeltes Zinksulfid, Lithopone, anorganisch-nachbehandelte Lithopone, Calciumcarbonat, anorganisch-nachbehandeltes Calciumcarbonat und Titandioxid verwendbar, die mit den, dem Fachmann bekannten anorganischen Nachbehandlungen, die mit einem chemisch-reaktiven Molekül, welches in der Lage ist, mit reaktiven Sauerstoff-Atomen (z.B. in Hydroxyl-Gruppen) der Partikeloberfläche zu reagieren, so dass sich eine kovalente Bindung ausbildet.

Die Erfindung betrifft somit neben den funktionalisierten Partikel, die funktionalisierte Pigmente oder funktionalisierte Füllstoffe sein können, auch das Verfahren zur Herstellung der funktionalisierten anorganischen Partikel, bei denen anorganische Partikel mit Silanoligomeren mit der allgemeinen Strukturformel (II)

(R¹)(OR²)₂Si-O-[-Si(R¹)(OR²)-O-]ₘ₋-Si(R¹)(OR²)₂

oder Mischungen davon umgesetzt werden und, falls erforderlich, die erhaltene Reaktionsmischung einer Trocknung unterzogen wird,
wobei in der zuvor genannten Formel (II):
- R¹ für einen nicht-hydrolysierbaren, aliphatischen gradkettigen oder verzweigtkettigen Kohlenwasserstoffrest mit 1 bis 18, bevorzugt mit 1 bis 10 Kohlenstoffatomen, auch mit -O- in der Kette, mit mindestens einer, bevorzugt endständigen funktionellen Gruppe, die eine Additions- oder Kondensationsreaktion eingehen kann, bevorzugt ausgewählt aus Amino-, Epoxy-, Vinyl-, Methacrylat, steht,
- R² für H oder eine hydrolysierbare Gruppe steht, und wobei m = 0 bis 10 ist. Im Falle der Herstellung in einer flüssigen Phase kann die erhaltene, in der Regel wässrige Suspension einer Trocknung und das Reaktionsprodukt gegebenenfalls einer Mahlung unterzogen wird, wobei in der zuvor genannten Formel (II) :
   R² vorzugsweise für C₁-C₁₈-Alkyl, besonders C₁-C₁₀-Alkyl, steht. Dabei können in der zuvor genannten Formel die Gruppen R¹ und R² jeweils auch für unterschiedliche Reste in einem Molekül stehen.

Die so hergestellten funktionalisierten Partikel können nach bekannten Verfahren in Beschichtungsmittel eingearbeitet werden, und die chemisch-reaktiven Gruppen, ausgewählt aus Amino-, Epoxy-, Vinyl-, Methacrylat, an den Kohlenwasserstoffresten können mit reaktiven Gruppen im Beschichtungsmittel Additions- oder Kondensationsreaktionen eingehen und so eine in ihren Eigenschaften verbesserte Eigenschaften der Beschichtung ergeben.

Das seitens der Erfinder beschriebene Verfahren zur Herstellung der funktionalisierten Partikel ist vorteilhafter im Sinne von Ökologie und Ökonomie. Das erfindungsgemäße Verfahren verzichtet vollständig auf Alkohole als Lösungsmittel und andere Lösungsmittel und ist demnach umweltfreundlicher, da keine Gefahrstoffe, keine gesundheitsschädlichen Stoffe und keine anderen organischen Komponenten freigesetzt werden. Zudem sind keine speziellen arbeitssicherheitsrelevanten Aspekte bei der Herstellung und Handhabung der Edukte und Produkte zu berücksichtigen (z.B. Ex-geschützte Apparaturen).

Die erfindungsgemäße Synthese der funktionalisierten Partikel zeichnet sich im Vergleich zum Stand der Technik durch weniger Prozessschritte aus. Das Produkt liegt in Pulverform vor und ist somit lagerstabil und zeichnet sich durch seine Flexibliltät in der Einarbeitung in alle gängigen reaktiven Monomersysteme, die dünne Schichten ausbilden können, aus. Das Produkt liegt somit als 100%iger Wirkstoff vor. Es können keine Systemunverträglichkeiten (z.B. Flockulation, Bildung von Gel-Teilchen) mit anderen Edukten des Monomer/Bindemittelsystems auftreten. Somit kann auf den Zusatz von Polymerteilchen, die als Spacer eingesetzt werden, komplett verzichtet werden.

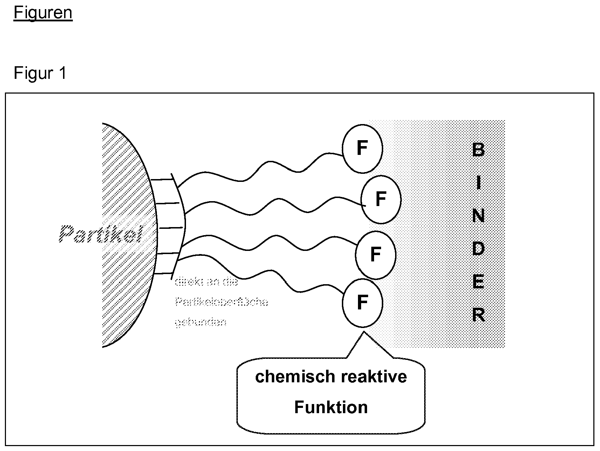

Figur 1 zeigt eine schematische Darstellung des Einsatzes von funktionalisierten Partikeln in reaktiven Monomer/Bindemittelsystemen zur Ausbildung dünner Schichten mit einer Schichtdicke von bis zu 200 µm, insbesondere 50 bis 100 µm.

Erfindungsgemäß bewirkt eine Kombination aus funktionalisierten Partikeln und Verbindungen mit reaktiven Monomeren als Bindemittel oder Bestandteile davon, die solche dünnen Schichten ausbilden können, auf Grund ihrer chemischen Struktur Verbesserungen bei Eigenschaften wie Kratzfestigkeit, Abriebbeständigkeit, Steinschlagfestigkeit, Korrosionsschutz, Haftung, Chemikalienbeständigkeit, Farbstabilität, Thermostabilität und Heißwasserbeständigkeit. Seitens der Erfinder wurde gefunden, dass durch den Zusatz von funktionalisierten Partikeln in Bindemittelsystemen, die dünne Schichten ausbilden können, solche Eigenschaften miteinander kombiniert werden.

Mittels der Verbindungen mit reaktiven Gruppen, die auch Monomere, Oligomere oder Prepolymere jeweils mit korrespondierenden funktionellen Gruppen, die mit den reaktiven Gruppen der funktionalisierten Partikel wechselwirken können, sein können, können folgende polymere Bindemittel-Matrizes hergestellt werden: Acrylat-(Co-)Polymere, Vinylacetat-Polymere, Vinyl/Acrylat-Polymere, Styrol/Acrylat-Copolymere, Polyurethane, Polyharnstoffe, Polyepoxide, Polyvinylchlorid, Ethylen/Vinylacetat Polymere, Styrol/Butadien-Polymere, Polyester, Polyamide, Polyether und Mischungen daraus. In die Verbindungen mit den reaktiven Gruppen können die funktionalisierten Partikel eingearbeitet und dann die Mischung zur Beschichtung von Oberflächen verwendet werden.

Die Erfindung wird im Nachfolgenden am Beispiel von Beschichtungssystemen wie Pulverlack-Zusammensetzungen erläutert, ohne sich auf einzuschränken. Die Erfindung ist somit auch gerichtet auf Pulverlackzusammensetzungen mit einem Gehalt an solchen funktionalisierten Partikeln, insbesondere funktionalisierten Titandioxidpartikeln und funktionalisierten BaSO₄-Partikeln, wobei die Reste mit funktionellen Gruppen über die -SiO-Einheiten kovalent an die Oberfläche des Partikels gebunden sind.

Somit ist die Erfindung auch gerichtet auf eine Pulverlack-Zusammensetzung, die enthält:
a. 20 bis 80 Gew.-% Bindemittel,
b. 5 bis 60 Gew.% anorganische Pigmente oder mineralische Füllstoffe,
c. 5 bis 60 Gew.-% funktionalisierte anorganische Partikel,
d. 0,1 bis 10,0 Gew.-% Additiv, ausgewählt aus Fluss-, Verlaufs-, Entlüftungsadditiven oder Mischungen davon,
wobei alle Bestandteile zusammen 100 Gew.- % ergeben.

In einer Ausführung der erfindungsgemäßen Pulverlackzusammensetzung liegendie funktionalisierten anorganischen Partikel, die Pigment oder Füllstoff sein können, in einer Menge von 10 bis 50 Gew.-%, besonders 30 bis 40 Gew.-%, vor.

In einer weiteren Ausführung der erfindungsgemäßen Pulverlackzusammensetzung liegt das anorganische Pigment oder der mineralischer Füllstoff in einer Menge von 10 bis 50 Gew.-%, besonders 30 bis 40 Gew.-%, vor.

Die erfindungsgemäße Pulverlackzusammensetzung kann weiterhin bis zu 15 Gew.-% Färbemittel, ausgewählt aus Farbpigment und Farbstoff oder Mischungen davon enthalten.

Zur Verbesserung der Bindung zwischen funktionalisiertem Pigment und Bindemittel kann in der erfindungsgemäßen Pulverlackzusammensetzung bis zu 10 Gew.-% Vernetzungshilfsmittel, ausgewählt aus Vernetzern, Katalysatoren oder Mischungen davon, enthalten sein.

Das mit reaktiven Resten funktionalisierte Partikel wird in der Regel aus Titandioxid- oder Bariumsulfat-Partikeln ausgewählt. Dabei kann das Bariumsulfat einer anorganischen Vorbehandlung unterzogen sein, um die nachfolgend aufgebrachten Verbindungen mit der Strukturformel (II) besser in Wechselwirkung mit den Bariumsulfat-Partikeln treten zu lassen.

Aufgrund der funktionellen Gruppen haften die reaktiven Reste über kovalente Bindungen direkt auf der Partikeloberfläche, womit eine Migration der Partikel in der Beschichtung verhindert wird. Des Weiteren ermöglichen solche reaktiven Endgruppen der reaktiven funktionalen Reste die Einbindung in das Polymersystem, womit eine Verankerung des Partikels im Polymer erzielt und eine verbesserte Flockungsstabilisierung realisiert wird. Ein weiterer Vorteil ist, dass auf ein zusätzliches Additiv zur Stabilisierung bei der Pulverlackherstellung verzichtet werden kann. Damit vereinfacht sich zusätzlich die Komplexität der Rezeptur.

Die Hauptkomponenten des erfindungsgemäßen Beschichtungssystems wie eines Pulverlacksystems sind das Bindemittel, das auch eine Mischung mehrerer Bindemittelkomponenten sein kann, und die funktionalisierten Partikel. Es sind Kombinationen aus Pigment und Füllstoff Stand der Technik bzw. Grundlage dieser Erfindung, solange in der Mischung zumindest funktionalisierte Partikel (Füllstoff oder Pigment) vorhanden sind.

| | **anorg. Pigment** | **anorg. Pigment (funktionalisiert)** | **ohne anorg. Pigment (dafür org. Pigment)** |
|---|---|---|---|
| Füllstoff | Stand der Technik | erfindungsgemäße Zusammensetzung | Stand der Technik |
| Füllstoff (funktionalisiert) | erfindungsgemäße Zusammensetzung | erfindungsgemäße Zusammensetzung | erfindungsgemäße Zusammensetzung |
| ohne Füllstoff | Stand der Technik | erfindungsgemäße Zusammensetzung | Stand der Technik |

Das Bindemittel bildet als Basis den Lackfilm, der alle Feststoffteilchen im Lack umhüllt. Die Auswahl des Bindemittels bestimmt im Wesentlichen die physikalischen Eigenschaften des Pulverlacks und somit dessen Einsatzbereich. Die Bindemittel bestimmen somit die grundlegenden Eigenschaften wie Oberflächenbeschaffenheit, Härte und Stabilität des Lackfilmes und sie bestehen in der Regel aus langkettigen organischen Verbindungen, die reaktive Gruppen enthalten, die miteinander als auch mit den funktionalisierten Partikeln, falls erforderlich über einen Härter/Vernetzer, zu verzweigten Makromolekülen reagieren können. Für die erfindungsgemäßen Zusammensetzungen für Pulverlacke kommen somit bevorzugt Kunstharze zum Einsatz, die miteinander vernetzen können.

Erfindungsgemäß können somit als Bindemittel grundsätzlich Epoxidharze, carboxy- und hydroxygruppenhaltige Polyester, Acrylatharze sowie Polyurethanharze oder Hybridsysteme aus den vorgenannten Harzen verwendet werden. Bevorzugt eignen sich Epoxygruppen-haltige Systeme.

Das Bindemittel kann wie erwähnt weiterhin Härter/Vernetzer enthalten. Als Härter verwendbare Substanzen sind je nach Bindemittelsystem Triglycidylisocyanurat (TGIC) und Hydroxylalkylamid für Polyesterharze, sowie Dodecandisäure. Bevorzugt ist die Verwendung von Hydroxylalkylamid. Allgemein können folgende Härter Einsatz finden:
Phenolische Härter, Imidazolin-Derivate, Anhydridaddukte, modifiziertes Dicyandiamid, Epoxidharz, Hydroxyalkylamid-Härter, aromatische Glycidylester, Isocyanataddukt und blockierte Uretdionen.

Als Verlaufs-/Flussmittel können Rizinusölderivate und Polyacrylatharze eingesetzt werden.

Als Entlüftungsadditiv kann Benzoin eingesetzt werden.

Als Füllstoffe können folgende synthetischen und natürlichen Mineralien eingesetzt werden: Schwerspat, Feldspat, Kreide, Quarzsand-/mehl, synthetisches Bariumsulfat, Aluminiumtrihydroxid, Wollastonit, Zinksulfid, Lithopone, Calciumcarbonat (GCC und NCC), Kieselsäure (gecoatet und ungecoatet), Nephelin-Syenit, Glimmer, Talkum und Kaolin.

Die funktionalisierten Partikel, insbesondere Titandioxid- oder Bariumsulfatpartikel, mit kovalent gebundenen, reaktiven funktionalen Resten werden als erfindungsgemäß wesentliche Komponente mit dem Bindemittel vermischt.

Die Herstellung von solchen mit reaktiven funktionellen organischen Resten versehenen Partikeln, insbesondere Titandioxid und Bariumsulfat, kann nach Verfahren durchgeführt werden, wie es bereits oben erläutert wurde

Dabei kann es sich zum einen um die Funktionalisierung in wässriger Phase handeln. Zum anderen kann die organische Komponente mit organischen Resten mit den reaktiven Gruppen daran zur Funktionalisierung durch direktes Aufsprühen und anschließendes Mischen/Mahlen auf die Partikeloberfläche aufgebracht werden.

Für den Fall, dass die Oberfläche der Partikel keine reaktiven Gruppen wie (-O-)/=O-Gruppen oder Hydroxy-Gruppen aufweist, die mit den reaktiven Gruppen der organischen Reste in Wechselwirkung treten können, beispielsweise bei BaSO₄, dann können solche Pigmente/Füllstoffe einer anorganischen Vorbehandlung unterzogen werden, die beispielsweise durch Ausfällung von Metalloxiden auf der Oberfläche der BaSO₄ Teilchen oder gemeinsame Ausfällung damit, solche Gruppen bereit gestellt werden.

Eine solche anorganische Oberflächenmodifizierung eines Bariumsulfates besteht typischerweise aus mindestens einer anorganischen Verbindung, die ausgewählt sind aus Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn und/oder Zirkon-Verbindungen bzw. Salzen. Beispielhaft genannt seien Natriumsilikat, Natriumaluminat und Aluminiumsulfat.

Die anorganische Oberflächenbehandlung von BaSO₄ kann in wässriger Aufschlämmung stattfinden. Die Reaktionstemperatur soll dabei vorzugsweise 50°C nicht übersteigen. Der pH-Wert der Suspension wird, beispielsweise unter Verwendung von NaOH auf pH-Werte im Bereich grösser 9 eingestellt. Unter starkem Rühren werden dann die Nachbehandlungschemikalien (anorganische Verbindungen), vorzugsweise wasserlösliche anorganische Verbindungen wie beispielsweise Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn und/oder Zirkon-Verbindungen oder Salze zugegeben. Der pH-Wert und die Mengen an Nachbehandlungschemikalien werden erfindungsgemäss so gewählt, dass letztere vollständig in Wasser gelöst vorliegen. Die Suspension wird intensiv gerührt, so dass sich die Nachbehandlungschemikalien homogen in der Suspension verteilen, vorzugsweise für mindestens 5 Minuten. Im nächsten Schritt wird der pH-Wert der Suspension abgesenkt. Als vorteilhaft hat sich dabei erwiesen, den pH-Wert langsam und unter starkem Rühren abzusenken. Besonders vorteilhaft wird der pH-Wert innerhalb von 10 bis 90 Minuten auf Werte von 5 bis 8 abgesenkt. Im Anschluss daran schließt sich erfindungsgemäss eine Reifezeit, vorzugsweise eine Reifezeit von etwa einer Stunde an. Die Temperaturen sollen dabei vorzugsweise 50°C nicht überschreiten. Die wässrige Suspension wird dann gewaschen und getrocknet. Zur Trocknung von funktionalisiertem BaS04 bietet sich beispielsweise die Sprühtrocknung, die Gefriertrocknung und/oder die Mahltrocknung an. Abhängig vom Trocknungsverfahren kann eine anschließende Mahlung der getrockneten Pulver notwendig sein. Die Mahlung kann nach an sich bekannten Verfahren durchgeführt werden.

Zur Funktionalisierung können die oben als erfindungsgemäss geeignet beschriebenen Verbindungen der Formel (II) unter starkem Rühren und/oder während einer Dispergierung zu einer Suspension der Partikel wie einer Titandioxid-Suspension oder einer Suspension von anorganisch vorbehandeltem Bariumsulfat gegeben werden. Dabei werden die reaktiven funktionalen organischen Reste an die Partikeloberfläche gebunden.

Erfindungsgemäss haben die funktionalisierten Partikel wie Titandioxidpartikel sowie die anorganisch nachbehandelten Füllstoffe wie Bariumsulfatpartikel über die funktionellen Reste ein oder mehrere funktionelle Gruppen, beispielsweise eine oder mehrere Hydroxy-, Amino-, Carboxyl-, Epoxy-, Vinyl-, Methacrylat- und/oder Isocyanat-Gruppen, Thiole, Alkylthiocarboxylate, Di- und/oder polysulfidische Gruppen. So sind die funktionalisierten Partikel über eine funktionelle Gruppe(n) an die Partikel gebunden sind und können über eine andere funktionelle Gruppe(n) mit der polymeren Matrix wechselwirken. Die reaktive Endgruppe(n) der Funktionalisierungskomponente ermöglich(t/en) die Einbindung in das Polymersystem, womit eine Verankerung des Pigmentpartikels im Polymer erzielt wird.

Zur Funktionalisierung von anorganischen, Partikeln oder anorganisch vorbehandelten Partikeln, beispielsweise zur Herstellung silanisierter, funktionalisierter BaSO₄-Partikel, kann eine wässrige BaSO₄-Suspension aus bereits anorganisch oberflächenmodifizierten BaSO₄-Partikeln mit mindestens einem Silan zusätzlich modifiziert werden. Als Silane können wie oben beschrieben Silanoligomere der Strukturformel (II) wie CoatOSil 142 Silane® (vorhydrolysiertes Aminosilan der Fa. Momentive) oder CoatOSil MP200 Silane® (vorhydrolysiertes Epoxysilan der Fa. Momentive) zur Funktionalsierung der Partikel eingesetzt. Dazu kann vor oder nach der Waschung eine BaSO₄-Suspension aus anorganisch oberflächenmodifizierten BaSO₄-Partikeln unter starkem Rühren oder unter Dispergierung mit der Siloxan-Verbindung wie einem Silanoligomer versetzt werden. Es schließt sich erfindungsgemäß eine Reifezeit an, vorzugsweise eine Reifezeit von 10 bis 60 Minuten, vorzugsweise bei Temperaturen von maximal 40°C. Anschließend kann wie bereits beschrieben weiter verfahren werden. Alternativ kann ein Silanoligomer der Formel (II) auch nach der Trocknung auf die anorganisch modifizierten Partikel durch Aufmischen aufgebracht werden.

Als Verbindungen mit reaktiven funktionalen Resten sind neben den Silanoligomeren, Silanen, Siloxanen und Polysiloxanen weiterhin geeignet organische Phosphon- und Phosphorsäuren sowie Titanate und Zirkonate.

Die funktionalisierten Partikel, beispielsweise ein Titandioxid-Pigment, werden vorzugsweise vor der Mischung mit weiteren Bestandteilen des Beschichtungsmittels getrocknet. Die Trocknung kann nach an sich bekannten Verfahren durchgeführt werden. Für die Trocknung bietet sich insbesondere der Einsatz von Konvektionstrocknern, Sprühtrocknern, Mahltrocknern, Gefriertrocknern und/oder Pulsationstrocknern an. Andere Trockner sind jedoch erfindungsgemäss ebenso einsetzbar. Abhängig vom Trocknungsverfahren kann eine anschliessende Mahlung der getrockneten Pulver notwendig sein. Die Mahlung kann nach an sich bekannten Verfahren durchgeführt werden.

Die mit den funktionellen Resten organisch modifizierten Partikel haben vorzugsweise einen mittleren Partikeldurchmesser von d50 = 1 nm bis 100 µm, bevorzugt von d50 = 1 nm bis 3 µm, besonders bevorzugt von d50 = 5 nm bis 1 µm und liegt vor der organischen Modifizierung vorzugsweise auf Primärpartikelgröße dispergiert vor.

Erfindungsgemäß können die im erfindungsgemäßen Pulverlack eingesetzten Partikel, beispielsweise auf Basis von Titandioxid, ein größtmögliches höchstes Deck- und Aufhellvermögen in einem Lacksystem bereitstellen, da sie bestmöglich als Primärpartikel im umgebenden Medium verteilt vorliegen. Dieses kann mit einer optimierten Dispergiertechnik unterstützt werden, wobei dabei folgende Punkte zu berücksichtigen sind:
1. Benetzung
2. Mechanische Zerteilung
3. Flockungsstabilisierung
Nach der Benetzung und der mechanischen Zerteilung der Agglomerate kommt es in Pulverlacken vor allem in der Schmelze sowohl bei der Extrusion als auch beim Einbrennvorgang auf die Stabilisierung der einzelnen Partikel an. Diese kann vor allem durch die erfindungsgemäße sterische Stabilisierung realisiert werden.

Nach der Benetzung und der mechanischen Zerteilung der Agglomerate kommt es in Pulverlacken vor allem in der Schmelze sowohl bei der Extrusion als auch beim Einbrennvorgang auf die Stabilisierung der einzelnen Partikel an. Diese kann vor allem durch die erfindungsgemäße sterische Stabilisierung realisiert werden.

Die erfindungsgemäße Pulverlackzusammensetzung kann somit vorteilhaft zum Beschichten von Gegenständen verwendet werden. Auf diese Weise lassen sich somit Pulverlacke bereitstellen, die für eine Vielzahl von Anwendungen geeignet sind, so für die Beschichtung von Metallen wie z. B. Metallrohren, Haushaltsgeräten wie z. B. Waschmaschinen, Herdrahmen, Dunstabzugshauben, Sanitärartikel wie z. B. Waschtisch- und Badezimmerarmaturen, Badewannen, Duschtassen und Duschkabinenprofile, PKW-Inneneinrichtungen, Automobilkarossen. Die Erfindung ist daher auch auf die mit den erfindungsgemäßen Pulverlacken beschichteten Gegenstände.

Die Erfindung wird anhand der folgenden Herstellungs- und Verwendungsbeispielen weiter erläutert.

### Herstellungsbeispiele

Die in den erfindungsgemäßen Zusammensetzungen für Pulverlacke erfindungsgemäß einsetzbaren funktionalisierten Partikel mit kovalent gebundenen, reaktiven funktionalen Resten werden in den folgenden Herstellungsbeispielen wie folgt hergestellt.

### Herstellungsbeispiel 1

In diesem Herstellungsbeispiel wurde ein TiO₂-Rutil-Pigment einer organischen Nachbehandlung wie folgt unterzogen.

20 kg Filterkuchen Hombitan R210 (Rutil-Pigment) mit einem Feststoffgehalt von 50% werden in 20 Liter Wasser mittels Dissolver bei 750 U/Min 30 Minuten lang dispergiert. Zur dieser Suspension werden 1,5% (bezogen auf Feststoff) des CoatOSil MP200 Silane® (vorhydrolysiertes Epoxysilan der Fa. Momentive) hinzugegeben und bei einer Drehzahl von 750 U/Min noch fünf Minuten gemischt. Die Suspension wird anschließend über einen Sprühturm mit einer Eintrittstemperatur von 400 °C und einer Austrittstemperatur von 120 °C getrocknet. Optimal kann der Sprühtrockner-Austrag noch über eine Stiftmühle oder Strahlmühle gemahlen werden.

### Herstellungsbeispiel 2

In diesem Herstellungsbeispiel wurde ein BaSO₄-Pigment einer organischen Nachbehandlung wie folgt unterzogen.
- BaSO₄-Filterkuchen mit 35 % Feststoffgehalt und einem d_{50,3} der Volumenverteilung von d_{50,3} = 0,7 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Natronlauge 5%ig
- Salzsäure 5 %ig
- Na₂SiO₃-Lösung mit 384 g SiO₂/l
- NaAlO₂-Lösung mit 262 g Al₂O₃/l
- BaS-Lösung mit 50 - 55 g BaS/l

2500 g BaSO₄-Paste wurden in ein Becherglas eingewogen und mit VE-H₂O auf 3300 g angeschlämmt. Die Suspension wurde auf 70 °C erwärmt und dann mit Natronlauge auf pH 7 eingestellt. Anschließend wurde mit 350 mL BaS-Lösung ein Bariumüberschuss von ca. 5 g Ba²⁺ /l eingestellt. Mit Salzsäure wurde wieder auf pH 7 eingestellt, dann wurde Na₂SiO₃-Lösung (0,1 % SiO₂ bezogen auf BaSO₄) zugegeben. Mit Salzsäure wurde auf pH 4 eingestellt und 30 min gereift. Mit Natronlauge wurde auf pH 6,0 gestellt und unter pH-Haltung NaAlO₂-Lösung (0,2 % Al₂O₃ bezogen auf BaSO₄) zugegeben. Danach erfolgte die Einstellung auf pH 7,0 und 30 min Reifung. Danach wurde die Suspension über eine Nutsche abgesaugt und auf einen Leitfähigkeit von < 300 µS/cm gewaschen. Der Filterkuchen wird in VE-Wasser redispergiert und auf den Feststoffgehalt bezogen 1,5 % CoatOSil 142 Silane® (vorhydrolysiertes Aminosilan der Fa. Momentive) zur Suspension gegeben. Nach einer Reifezeit von 15 Minuten wird die Suspension sprühgetrocknet.

### Verwendunasbeispiele

### Untersuchung des Deckvermögens

Gemäß in der Tabelle 1 angegebenen Rezepturen wurden Pulverlackzusammensetzungen hergestellt und auf ihr Deckvermögen untersucht.

| **Tabelle 1** | | | | | |
|---|---|---|---|---|---|
| **Komponente** | **1** | **2** | **3** | **4** | **5** |
| Bindemittel: Polyester | 1755,0 | 1755,0 | 1755,0 | 1755,0 | 1755,0 |
| Bindemittel: Epoxy | 1170,0 | 1170,0 | 1170,0 | 1170,0 | 1170,0 |
| Verlaufsmittel | 25,0 | 25,0 | 25,0 | 25,0 | 25,0 |
| Entgasungsmittel | 50,0 | 50,0 | 50,0 | 50,0 | 50,0 |
| | | | | | |
| Sachtleben R210 | 2000,0 | | | | |
| TiO2 Rutil ohne organ. NB | | 2000,0 | | | |
| TiO2 Rutil mit 1 Gew-% reaktiver Funktionalisierung A | | | 2000,0 | | |
| TiO2 Rutil mit 2 Gew-% reaktiver Funktionalisierung A | | | | 2000,0 | |
| TiO2 Rutil mit 1 Gew-% reaktiver Funktionalisierung B | | | | | 2000,0 |

| | | | | | |
|---|---|---|---|---|---|
| NB: Nachbehandlung | | | | | |

### Verarbeitung der Rezepturen

Die Rezepturkomponenten wurden in einem Mischer 1 h bei 1000 Upm vorgemischt. Die Extrudationen wurde mit 300 Upm Schneckendrehzahl, 100°C Gehäusetemperatur und einer Zugabemenge von 45 kg/h durchgeführt. Die Pulver wurden mittels Korona-Pistole bei 60 KV aufgetragen.

### Bestimmung des Deckvermögens

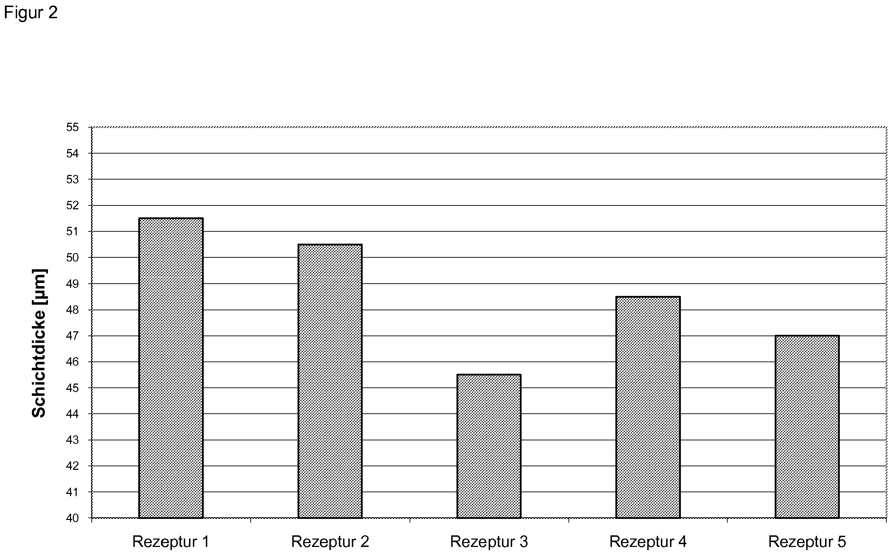

Zur Bestimmung des Deckvermögens wurde der Pulverlack auf ein phosphatiertes Stahlblech, auf dem eine Aluminium-Kontrastfolie mit Schachbrettmuster befestigt war, appliziert. Der Pulverlack wurde gleichmäßig mit von oben nach unten abnehmender Schichtdicke auf das Substrat aufgebracht und anschließend 20 min bei 180 °C eingebrannt. Nach dem Einbrennen wurde visuell ermittelt, an welcher Stelle der Untergrund der Aluminium-Kontrastfolie nicht mehr zu sehen war. Die zugehörige Schichtdicke wurde mit einem Schichtdickenmessgerät bestimmt. Das Ergebnis der Bestimmung des Deckvermögens ist in Figur 2 dargestellt. Die erfindungsgemäßen Rezepturen (3-5) ermöglichen gegenüber den Rezepturen aus dem Stand der Technik (1; 2) eine Herabsetzung der Schichtdicken um bis zu 15%, was eine erhebliche Einsparung an eingesetztem Pulverlack bedeutet.

### Untersuchung der Heißwasserbeständigkeit

Gemäß den Tabelle 2 angegebenen Rezepturen wurden Pulverlackzusammensetzungen hergestellt und auf ihre Heißwasserbeständigkeit untersucht.

| **Tabelle 2** | | | | | | |
|---|---|---|---|---|---|---|
| **Komponente** | **1** | **2** | **3** | **4** | **5** | **6** |
| Bindemittel: Polyester | 4196 | 2517,5 | 2517,5 | 2517,5 | 2517,5 | 2517,5 |
| Härter | 221 | 132,5 | 132,5 | 132,5 | 132,5 | 132,5 |
| Verlaufsmittel | 83,5 | 50 | 50 | 50 | 50 | 50 |
| Entgasungsmittel | 41,5 | 25 | 25 | 25 | 25 | 25 |
| Heliogenblau K6907 | | 5 | 5 | 5 | 5 | 5 |
| Titandioxid (Rutil) | 416,5 | 250 | 250 | 250 | 250 | 250 |
| | | | | | | |
| Bariumsulfat 1 (synth. 3 µm, keine NB) | 2000 | | | | | |
| Bariumsulfat 2 (synth., 0,7 µm, organ. NB: Amin) | | 2000 | | | | |
| Bariumsulfat 3 (synth. 0,7 µm, anorg NB, organ. NB: Amin) | | | 2000 | | | |
| Bariumsulfat 4 (synth., 0,7 µm, mit reaktiver Funktionalisierung) | | | | 2000 | | |
| Bariumsulfat 5 (Schwerspat, 1 µm) | | | | | 2000 | |
| Calciumcarbonat (GCC) | | | | | | 1227,5 |

| | | | | | | |
|---|---|---|---|---|---|---|
| NB: Nachbehandlung | | | | | | |

### Verarbeitung der Rezepturen

Die Rezepturkomponenten wurden in einem Mischer 1 h bei 1000 Upm vorgemischt. Die Extrudationen wurde mit 300 Upm Schneckendrehzahl, 100°C Gehäusetemperatur und einer Zugabemenge von 45 kg/h durchgeführt.
Die Pulver wurden mittels Korona-Pistole bei 60 KV in einer Schichtdicke von 60 µm aufgetragen. Die Härtung der Pulverlacke erfolgte 20 min. bei 180°C.

### Bestimmung des Heißwasserbeständigkeit

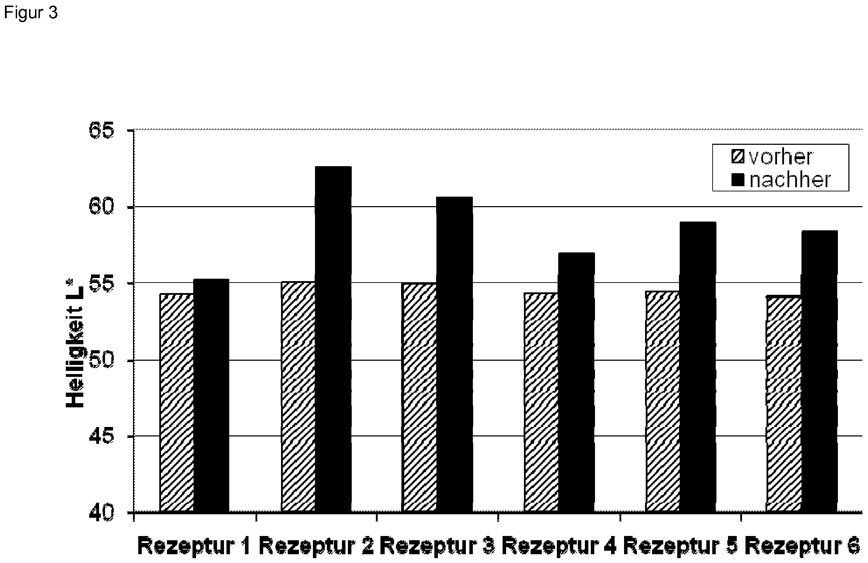

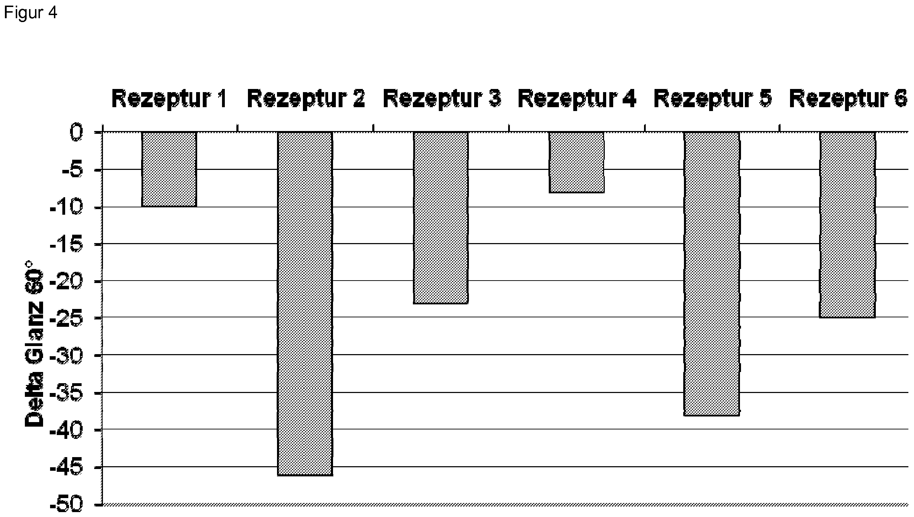

Die Pulverlackierung wurde zur Hälfte 8 h in 70 °C heißes Wasser getaucht und anschließend bezüglich Farbabstandsdaten (Figur 3) und Glanz (Figur 4) gemessen.

Wie in Figur 3 zum Einfluss verschiedener Füllstoffe auf die Helligkeit L* und in Figur 4 zum Einfluss verschiedener Füllstoffe auf die Veränderung des Glanz 60° jeweils vor und nach Heißwasserbelastung bei 8 h 70 °C gezeigt, hat die erfindungsgemäße Rezeptur 4 eine positiven Einfluss auf die Helligkeit als auch die Veränderung des Glanzes der Beschichtungen.

| Tabelle 3 | | | | | | |
|---|---|---|---|---|---|---|
| | Helligkeit L* | | Delta L* | Glanz 60° | | Delta Glanz 60° |
| | vorher | nachher | | vorher | nachher | |
| Rezeptur 1 | 54,3 | 55,2 | 1,0 | 90 | 80 | -10 |
| Rezeptur 2 | 55,0 | 62,7 | 7,6 | 73 | 27 | -46 |
| Rezeptur 3 | 54,9 | 60,6 | 5,7 | 82 | 59 | -23 |
| Rezeptur 4 | 54,3 | 57,0 | 2,7 | 71 | 63 | -8 |
| Rezeptur 5 | 54,4 | 59,0 | 4,6 | 79 | 41 | -38 |
| Rezeptur 6 | 54,1 | 58,5 | 4,3 | 71 | 46 | -25 |

## Patentansprüche

1. Verfahren zur Herstellung von funktionalisierten anorganischen Partikeln, bei denen anorganische Partikel mit Silanoligomeren mit der allgemeinen Strukturformel (II)
(R¹)(OR²)₂Si-O-[-Si(R¹)(OR²)-O-]ₘ₋-Si(R¹)(OR²)₂ (II)
oder Mischungen davon umgesetzt werden und, falls erforderlich, die erhaltene Reaktionsmischung einer Trocknung unterzogen wird,
wobei in der zuvor genannten Formel (II):
- R¹ für einen nicht-hydrolysierbaren, aliphatischen gradkettigen oder verzweigtkettigen Kohlenwasserstoffrest mit 1 bis 18, bevorzugt mit 1 bis 10 Kohlenstoffatomen, auch mit -O- in der Kette, mit mindestens einer, bevorzugt endständigen funktionellen Gruppe, die eine Additions- oder Kondensationsreaktion eingehen kann, bevorzugt ausgewählt aus Amino-, Epoxy-, Vinyl-, Methacrylat, steht,
- R² für H oder eine hydrolysierbare Gruppe steht, und
wobei m = 0 bis 10 ist.

2. Verfahren nach Anspruch 1, wobei R² für C₁ - C₁₈ -Alkyl steht.

3. Verfahren nach Anspruch 1 oder 2, bei dem Titandioxid- oder BariumsulfatPartikel als anorganische Partikel eingesetzt werden.

4. Verfahren nach Anspruch 3, bei dem das Bariumsulfat einer anorganischen Vorbehandlung unterzogen worden ist.

5. Funktionalisierte Partikel, erhältlich nach dem Verfahren gemäß einem der Ansprüche 1 bis 4.

6. Verwendung der funktionalisierten Partikeln gemäß Anspruch 5 zur Herstellung einer Beschichtungszusammensetzung, insbesondere in Mischung mit Verbindungen, die reaktive funktionelle Gruppen aufweisen, die in der Lage sind, mit den funktionellen Gruppen der funktionalisierten Partikel Additions- oder Kondensationsreaktionen einzugehen.

7. Beschichtungszusammensetzung, die funktionalisierte Partikel nach Anspruch 5 und Verbindungen mit funktionellen Gruppen enthält, die in der Lage sind, mit den funktionellen Gruppen der funktionalisierten Partikel Additions- oder Kondensationsreaktionen einzugehen.

8. Beschichtungszusammensetzung nach Anspruch 7 in Form einer Pulverlackzusammensetzung, enthaltend
a. 20 bis 80 Gew.-% Bindemittel,
b. 5 bis 60 Gew.% anorganisches Pigment oder mineralischer Füllstoff,
c. 5 bis 60 Gew.-% funktionalisierte Partikel nach Anspruch 5,
d. 0,1 bis 10,0 Gew.-% Additiv, ausgewählt aus Fluss-, Verlaufs-, Entlüftungsadditiven oder Mischungen davon,
wobei alle Bestandteile zusammen 100 Gew.- % ergeben.

9. Beschichtungszusammensetzung nach Anspruch 8, wobei das funktionalisierte Pigment und/oder der Füllstoff in einer Menge von 10 bis 50 Gew.-%, bevorzugt 30 bis 40 Gew.-%, enthalten ist.

10. Verwendung der Beschichtungszusammensetzung nach einem der Ansprüche 7 bis 9 zum Beschichten von Gegenständen.

11. Mit der Beschichtungszusammensetzung nach einem der Ansprüche 7 bis 9 beschichtete Gegenstände.

12. Verwendung der funktionalisierten Partikel gemäß Anspruch 5 zur Verbesserung der Eigenschaften einer Beschichtung auf einem Substrat, ausgewählt aus Kratzfestigkeit, Abriebbeständigkeit, Steinschlagfestigkeit, Korrosionsbeständigkeit, Haftung, Chemikalienbeständigkeit, Deckvermögen Farbstabilität sowie Thermostabilität, insbesondere Heißwasserbeständigkeit.

## Claims

1. Method of producing functionalized inorganic particles by reacting inorganic particles with a silane oligomer having the general structural formula (II)
(R¹)(OR²)₂Si-O-[-Si(R¹)(OR²)-O-]ₘ-Si(R¹)(OR²)₂ (II)
or mixtures thereof, and if necessary, subjecting the resulting reaction mixture to drying,
wherein in the aforementioned formula (II):
- R¹ is a non-hydrolyzable, aliphatic straight-chain or branched-chain hydrocarbon radical having 1 to 18, preferably having 1 to 10 carbon atoms, also with -O- in the chain, having at least one, preferably terminal functional group, which is able to enter in an addition reaction or condensation reaction, preferably selected from amino, epoxy, vinyl, and methacrylate,
- R² is H or a hydrolysable group and wherein m is 0 to 10.

2. The method as claimed in claim 1, wherein R² is C₁-C₁₈-alkyl.

3. The method as claimed in claim 1 or 2, wherein the titanium dioxide- or barium sulfate particles are used as inorganic particles.

4. The method as claimed in claim 3, wherein the barium sulfate is subjected to an inorganic pretreatment.

5. Functionalized particles obtainable by the process according to any one of claims 1 to 4.

6. Use of the functionalized particles according to claim 5 for the production of a coating composition, particularly in admixture with compounds, which have reactive functional groups, which are capable of undergoing addition- or condensation reactions with the functional groups of the functionalized particles.

7. Coating composition, which contains functionalized particles according to claim 5 and compounds having functional groups, which are capable of undergoing addition- or condensation reactions with the functional groups of the functionalized particles.

8. The coating composition according to claim 7 in the form of a powder coating composition, containing
- 20 to 80 wt.% of binder,
- 5 to 60 wt.% of inorganic pigment or mineral filler material,
- 5 to 60 wt.% of functionalized particles according to claim 5,
- 0.1 to 10.0 wt.% of additives selected from group consisting of flow additives, leveling additives and deaerating additives or mixtures thereof,
wherein all the ingredients together make 100% by weight.

9. The coating composition according to claim 8, wherein the functionalized pigment and/or the filler material is present in an amount of 10 to 50 wt.%, preferably 30 to 40 wt.%.

10. Use of the coating composition according to any one of claims 7 to 9 for the coating of articles.

11. Coated articles with the coating composition according to any one of claims 7 to 9.

12. Use of the functionalized particles according to claim 5 for improving the properties of a coating on a substrate, selected from scratch resistance, abrasion resistance, stone impact resistance, corrosion protection, adhesion, chemical resistance, opacity color stability, and thermal stability, especially hot water resistance.

## Revendications

1. Procédé, destiné à produire des particules inorganiques fonctionnalisées, lors duquel on transforme des particules inorganiques avec des oligomères silane de la formule structurelle générale (II)
(R¹)(OR²)₂Si-O-[-Si(R¹)(OR²)-O-]ₘ--Si(R¹)(OR²)₂ (II)
ou des mélanges de ces derniers et si nécessaire, on soumet le mélange réactionnel obtenu à un séchage,
dans la formule (II) précédemment citée :
- R¹ étant placé pour un radical de carbone non hydrolysable, aliphatique à chaîne droite ou ramifiée avec de 1 bis 18, de préférence de 1 à 10 atomes de carbone, également avec -O-dans la chaîne, avec au moins un groupe fonctionnel, de préférence terminal, susceptible d'entrer en réaction d'addition ou de condensation, choisi de préférence parmi l'aminoacryltate, l'époxyacrylate, le vinylacrylate, le méthacrylate,
- R² étant placé pour H ou un groupe hydrolysable, m = de 0 à 10.

2. Procédé selon la revendication 1, R² étant placé pour de l'alkyle de C₁ à C₁₈.

3. Procédé selon la revendication 1 ou 2, lors duquel on met en oeuvre en tant que particules inorganiques des particules de dioxyde de titane ou de sulfate de baryum.

4. Procédé selon la revendication 3, lors duquel on soumet le sulfate de baryum à un traitement inorganique préliminaire.

5. Particules fonctionnalisées, susceptibles d'être obtenues d'après le procédé selon l'une quelconque des revendications 1 à 4.

6. Utilisation des particules fonctionnalisées selon la revendication 5, pour la production d'une composition de revêtement, notamment en mélange avec des composés qui présentent des groupes fonctionnels réactifs qui sont aptes à entrer en réaction d'addition ou de condensation avec les groupes fonctionnels des particules fonctionnalisées.

7. Composition de revêtement qui contient des particules fonctionnalisées selon la revendication 5 et des composés avec des groupes fonctionnels qui sont aptes à entrer en réaction d'addition ou de condensation avec les groupes fonctionnels des particules fonctionnalisées.

8. Composition de revêtement selon la revendication 7, sous la forme d'une composition de peinture en poudre, contenant
a. de 20 à 80 % en poids d'agents liants,
b. de 5 à 60 % en poids d'un pigment inorganique ou d'un agent de charge minéral,
c. de 5 à 60 % en poids de particules fonctionnalisées selon la revendication 5,
d. de 0,1 à 10,0 % en poids d'additif, choisi parmi les additifs d'écoulement, les additifs nivelants, les additifs de purge,
tous les composants réunis donnant 100 % en poids.

9. Composition de revêtement selon la revendication 8, le pigment fonctionnalisé et/ou l'agent de charge étant contenus dans une quantité de 10 à 50 % en poids, de préférence de 30 bis 40 % en poids.

10. Utilisation de la composition de revêtement selon l'une quelconque des revendications 7 à 9 pour revêtir des objets.

11. Objets revêtus avec la composition de revêtement selon l'une quelconque des revendications 7 à 9.

12. Utilisation des particules fonctionnalisées selon la revendication 5, pour améliorer les propriétés d'un revêtement sur un substrat, choisies parmi la résistance aux éraflures, la résistance à l'abrasion, la résistance aux impacts de graviers, la résistance à la corrosion, l'adhérence, la résistance aux produits chimiques, la couvrance, la stabilité des couleurs, ainsi que la thermostabilité, notamment la résistance à l'eau chaude.
